(19) Europäisches Patentamt
European Patent Office
Office européen des brevets

(11) Publication number: **0 048 704**
**B1**

(12) **EUROPEAN PATENT SPECIFICATION**

(45) Date of publication of patent specification: **20.02.85**

(51) Int. Cl.[4]: **G 01 S 13/90**

(21) Application number: **81870035.3**

(22) Date of filing: **15.09.81**

(54) **Method of and apparatus for processing data generated by a synthetic aperture radar system.**

(30) Priority: **26.09.80 GB 8031122**

(43) Date of publication of application:
**31.03.82 Bulletin 82/13**

(45) Publication of the grant of the patent:
**20.02.85 Bulletin 85/08**

(84) Designated Contracting States:
**DE FR GB IT NL SE**

(56) References cited:
**DE-B-2 125 675**
**US-A-3 927 405**
**US-A-4 045 795**
**US-A-4 132 989**
**US-A-4 227 194**

**PROCEEDINGS OF THE IEE-F, Vol. 127, No. 2, April 1980, Stevenage, D.J. BONFIELD et al. "Synthetic-aperture-radar real-time processing", pages 155 to 162**

(73) Proprietor: **AGENCE SPATIALE EUROPEENNE**
**8-10, rue Mario Nikis**
**F-75738 Paris Cedex 15 (FR)**

(72) Inventor: **Okkes, Willem**
**Munnikenpark 8**
**Leiderdorp (NL)**

(74) Representative: **Vanderperre, Robert et al**
**Bureau VANDER HAEGHEN 63 Avenue de la Toison d'Or**
**B-1060 Bruxelles (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method of processing data generated by space or airborne Synthetic Aperture Radar (SAR) systems and to an apparatus for carrying out said method.

In order that the invention may be readily understood, the basic principles of a SAR system will first briefly be described. In a SAR system a radar is installed aboard a spacecraft or aircraft; by processing the return signals or echoes of the emitted signals, it is possible to generate an image of the ground.

Consider a satellite which is provided with a radar moving in the azimuth direction (Fig. 1). At time $t=T_1$, the position of the radar is $A_1$ and at that moment the radar illuminates a patch on the ground indicated by ABCD. At that time the point target X enters the antenna main lobe and the echo received on the satellite contains information relating to that target. At time $t=T_6$ the satellite reaches the position $A_6$ and at that time the point target X leaves the antenna main lobe. At time $t=T_6+\Delta t$, the echo received on the satellite will not contain anymore information relating to that point target. In other words, a point target will be illuminated as long as it lies in the antenna ground patch and consequently the echoes will contain information relating to that point target as long as it is illuminated. For example, this corresponds to the time interval $T_6$—$T_1$ on Fig. 1 or the distance $A_1$—$A_6$ covered by the satellite along its path. This distance is called the synthetic aperture length. The signals emitted by the radar are not continuous: at times $T_1$, $T_2$, $T_3 \ldots T_6$ snapshots are made. In order to obtain a good resolution all the radar return signals received at these times are processed.

The processing principle consists of coherent integration of the radar echo sample vectors: prior to summation of all signal samples obtained from a specific point scatterer during its aperture time duration, the sample vectors are rotated by the appropriate phase angles (given by the known trajectory) so that all samples from that point are added in phase and those of other points are substantially suppressed due to incoherent addition. The result of the processing is that all point scatterers are resolved with respect to their position on the ground and an image is obtained. Although the principle of coherent integration of SAR data is simple, the implementation of this concept to yield useful imagery in a practical and cost effective manner is a non-trivial problem due to the very large number of operations involved. The operation of coherent integration can be performed mathematically as a correlation of the stored received signal samples with a reference function of which the phase variation corresponds to the one of a point scatterer.

Since the synthetic aperture radar works with monochromatic illumination of a scene the image has a speckly, grainy appearance. A single look image defined as an image observed just sufficiently long enough to obtain the required resolution. In order to reduce the speckle phenomena a multi-look approach can be used. The multiple look processing principle consists in adding a number of single-look images in a non-coherent manner. A method for obtaining multiple looks is to collect the data for a certain length of time, process the information into one look, process the next set of data into the next look followed by incoherent addition of the different looks.

Since in the azimuth direction the Doppler effect is present, it is possible to apply the multiple look principle in the azimuth direction by using the fact that each look will have another place in the Doppler spectrum. It is clear that the images are separated in a spectral sense which is equivalent to a spatial separation of the images.

The data from a first look is obtained by processing a first portion of the Doppler spectrum and storing the data, then the next portion of the Doppler spectrum is processed and the data therefrom is stored and added to the previous one and so on until the synthetic aperture is generated.

When the data is processed in "n" separate looks, the resolution element is "n" times larger and the picture is thus smoothed at the expense of the resolution.

In order to get an adequate signal back from the target, i.e. to get the desired resolution a short duration pulse (e.g. 70 n sec) with a peak power of several hundreds of kilowatts is needed. This is very difficult to implement and therefore another method, known as pulse-compression, is used. This method consists in transmitting the needed energy dispersed over a longer period of time and processing the obtained data using pulse compression. In practice a linear FM signal or chirped signal is used because it is easy to compress.

The data collected from a single point target is dispersed in range time (R) and in azimuth direction (AZ). The range time is equal to the chirp duration, e.g. $\pm$ 30 $\mu$sec.

This data can be compressed either in range or in azimuth first. By compression is meant that the data collapses to one line. In the case of range compression the data would collapse to one line along the azimuth direction and in the case of azimuth compression the data would collapse to one line in the range time direction. In order to obtain the point target data the range can first be compressed and afterwards the azimuth. The data point corresponding to a point target is the intersection of those two lines. In practice the compression is performed by cross-correlation of the received signals with reference functions which depend on the radar sensor parameters, the satellite orbit, the spacecraft's attitude and earth parameters.

For the cross-correlation the received signals are stored in matrix form:

$$\begin{Vmatrix} R_{11} & R_{12} \ldots & R_{1n} \\ R_{21} & & \\ '' & & \\ '' & & \\ R_{p1} & & R_{pn} \end{Vmatrix}$$

where

n=number of snapshots made between $A_1$ and $A_6$

p=number of samples in range direction.

For example, for a typical spacecraft radar, a resolution of 25 meters and a range swath of about 100 km corresponds to n=1000; p=6000. The reference function is of course also a matrix.

The commonly used correlation processing is either a processing in time-frequency domain or a processing by spectral analysis.

A multi-look imagery can be obtained by incoherent addition or consecutive correlation. The commonly used method to generate multi-look imagery is to perform the correlation only over a part of the total signal history making use of the property of the signal that consecutive parts of the signal history extended in time also occupy consecutive parts of the total Doppler spectrum. This method is called "look filtering" and is an effective means to reduce the amount of azimuth correlation processing but it creates an appreciable processing load by itself.

The state-of-the-art methods are illustrated by the journal article "Synthetic Aperture Radar Real-time Processing" by D. J. Bonfield and J. R. E. Thomas (IEE Proceedings, Vol. 127, PT. F, No. 2, April 1980). These methods use an input signal an already compressed range signal. In that case, the compressed signal must be corrected by means of a linear range migration correction unit LRMC. The range migration of a point target is due to the fact that for a target the range changes with the position of the spacecraft travelling along the X-axis with an antenna illuminating a point target 0 on the ground (Fig. 2). This point is for the first time illuminated when the spacecraft reaches position $A_1$ where the range (distance $A_1$—0) is at a maximum. When the spacecraft reaches point $A_3$ the range is at a minimum. The variation in range $\Delta R$ is called range migration This variation is given approximately by:

$$\Delta R = \frac{1}{R_o}\left(XX_o + \frac{X^2}{2}\right)$$

where $\Delta R$ and X are measured from the point at which the target is at beam centre position. The beam centre position is at $X_0$ distance from the point at closest target approach.

In many cases (S-band or higher frequency radars) the correction for the linear term is sufficient and can be implemented prior to azimuth processing.

The present invention relates in particular to azimuth processing. Prior art azimuth processing (see for instance the article mentioned above) involves the correlation of radar returns at each resolvable range with a reference function, resulting in a set of compressed pulses which are stored in a memory. The further processing of these pulses involves range migration correction. This processing can be carried out either in the time domain, involving delay-time structures, or in the frequency domain requiring the use of a discrete Fourier transform, and buffer storage. Final processing includes Doppler history processing to derive the output pixels. The disadvantages of the prior art systems are that they require high processing rates due to their complicated structure, and large mass memories.

The object of the invention is to extract single and multi-look imagery data from the data signals of a synthetic aperture radar (SAR) system in efficient manner by an improved method of processing the data signals.

In accordance with the invention, the received SAR data signals are cross-correlated with a reference function signal having a frequency-time history equal and opposite to the ideal received signal, thereby to produce a series of constant-frequency signals displaced in time, and further processing the constant-frequency signals thus produced by a discrete Fourier transform (DFT) spectral analysis. The processed signals then are selected and detected based on Doppler centroid estimation (known per se) before being accumulated and compensated for geometric distortions.

The method according to the invention can be implemented as a one-dimensional approach accepting already compressed (either in range or in azimuth) data signals or as a two-dimensional approach which is able to use as input raw data signals extending both in azimuth and in range domain.

The invention is further described hereinafter with reference to the accompanying drawings in which:

Figs. 1 and 2 are diagrams serving to illustrate the operation of a SAR system;

Fig. 3 is a schematic block diagram depicting a first embodiment of the invention;

Figs. 4 and 5 depict the frequency-time history of the compressed SAR signal;

Figs. 6 and 7 depict the first step of processing in accordance with the invention;

Fig. 8 is a diagram in time-frequency domain depicting the second step of single-look processing in the embodiment of Fig. 3;

Fig. 9 is a diagram in time-frequency domain depicting the second step of multi-look processing in the embodiment of Fig. 3;

Fig. 10 is a schematic block diagram depicting a variation to the embodiment of Fig. 3;

Fig. 11 is a diagram in time-frequency domain depicting the second step of single-look processing in the embodiment of Fig. 10;

Fig. 12 depicts the second step of multi-look processing in the embodiment of Fig. 10;

Fig. 13 depicts the response of a target area in range and azimuth;

Fig. 14 is a schematic block diagram depicting a second embodiment of the invention.

The invention can be implemented in a one-dimensional or two-dimensional approach. Referring first to Fig. 3 there is shown a schematic block diagram of a first embodiment for a one-dimensional approach. This embodiment uses a range compressed signal which is first of all applied to a well-known linear range migration correction unit LRMC for correction as explained hereinbefore. The corrected azimuth radar signal is then processed as follows.

The first step consists in cross-correlating (block 1) the received signal with an azimuth reference function from generator 2. The reference function is chosen to have a frequency-time history equal and opposite to the frequency-time history of the ideal received signal. This signal is given by an exponential function, the instantaneous frequency of which can be calculated by differentiating the phase thereof and is given by

$$f_n = -Ka.n.\tau$$

where

$\tau$=azimuth sampling period

Ka=azimuth FM rate (in Hz/sec)

n=sample number

The relation shows that the frequency varies linearly with time. Fig. 4 shows a frequency-time history of such a signal for one point target. The beginning of the signal corresponds with the point target entering the antenna main lobe and the end of the signal indicates that the antenna main lobe no longer detects the point target.

For a series of point targets with constant range there is produced a series of reflected signals having the same frequency history but which are displaced in time (azimuth direction) one relative to the other as shown in Fig. 5.

The reference function generator 2 can be implemented in various forms by those skilled in the art. The reference function used is a linear FM signal labeled RS on Fig. 6a.

Since now the input signal $S_1$ and the reference signal RS are exponential functions, the multiplication of these two signals means that their arguments are added. The frequency of the product will thus be constant as shown by the line labeled CS in Fig. 6c. For a second input signal $S_2$ detected at a later time (Fig. 6d) the cross-correlation with the reference function RS will also produce a constant-frequency signal but of a higher frequency as illustrated by line CS2 on Fig. 6e. Thus, the cross-correlation of a series of input signals corresponding to a series of point targets will produce a series of constant-frequency signals $CS_1$, $CS_2$, ... $CS_n$ as shown on Fig. 7. The spectral band occupied by these correlated signals is equal to the pulse repetition frequency (p.r.f.). Constant frequency lines are contained in a single range bin as they are generated by iso-range targets.

Since the information is received rangeline per rangeline and the information is needed in azimuth direction the information is stored in a buffer memory 3. The memory organization is such that the read-in mode is in range order (fast time) and the read-out is in azimuth order (slow rate).

The next process step consists in an azimuth processing of the signal in blocks 5 and 6 (as illustrated in Fig. 3). The signal processing uses the well-known discrete Fourier transform DFT (block 5) associated with a weighting select and detect function (block 6) as will be explained hereinafter with reference to Fig. 8 which shows a family of target signals in the time-frequency diagram. A number of N points are processed in block 5 corresponding to a vertical rectangle abcd in the diagram. This rectangle can be divided into two parts: one part labelled 1 which lies entirely in the time-frequency region of actual targets and will consequently define unambiguous targets, and a second part labelled 2 which does not lie inside the time-frequency region of any actual target, i.e. a part which contains information relating to different targets. Thus the first part will only give good results and the second part must be discarded. The next DFT operation is applied after a predetermined time and similarly defines two rectangles 1′ and 2′: here part 2′ contains information relating to actual target and part 1′ does not.

The first part 1 of the first DFT operation and the second part 2′ of the second DFT operation cover all range bins generated within one cycle period of the reference function. Functional block 6 operates to select the samples corresponding to the parts 1 and 2′ in the time-frequency domain of Fig. 8. Although continuous frequency is provided in the output data (part 1+part 2′), not all input data was needed to provide it. The fact that not all the information has been used leads to not achieving the inherent resolution of the data. Although yielding a poor resolution this approach is very attractive since the processing of the signals is very simple, and is suitable e.g. for quick look purposes. A high resolution can be obtained by using a larger part of the Doppler spectrum available at the expense of a lower DFT efficiency.

Multi-look processing can be performed as illustrated on Fig. 9. Considering the rectangle 1 of Fig. 8, it can be divided into *n* equal parts labelled DiLj, where $i \leqslant j \leqslant n$. In Fig. 9, n=4.

The next DFT operation also defines a rectangle situated between the two vertical guard lines. This DFT overlaps a part of the

preceding one. The starting frequency of this next DFT operation depends on the number *n* of equal parts used. A condition is that the first part of any DFT operation covers the same frequency band as the second part of the preceding DFT operation, e.g.:

$$Freq(D_iL_2)=Freq(D_{i+1}L_1)$$

By using smaller size DFT frequency bands (or higher number *n*) it is possible to cover a greater portion of the total information area (area between the guard lines).

Since one constant-frequency line represents one point target, the different parts of the DFT operation with the same frequency band can be considered as different looks. In other words the information stored in area ABCD on Fig. 9 can be divided into $D_{i+3}$ $L_1$; $D_{i+2}$ $L_2$; $D_{i+1}$ $L_3$; $D_i$ $L_4$.

Appropriate data selection in block 6 (Fig. 3) is based on Doppler centroid estimation DCE (known per se). Consecutive blocks of processed data are summed (incoherently) and stored (block 8) until all looks are accumulated. Prior to look summation, looks registration (block 7) might be required, depending on known azimuth correlation mismatch conditions. Output sample rate adjustment in order to obtain a constant rate over the full range swath is also required (block 9) in case the F. M. rate of the processor generated signal is varied as a function of range. Due to specific geometric distortions introduced by the processor a deskew processing operation (block 10) is necessary to compensate for it.

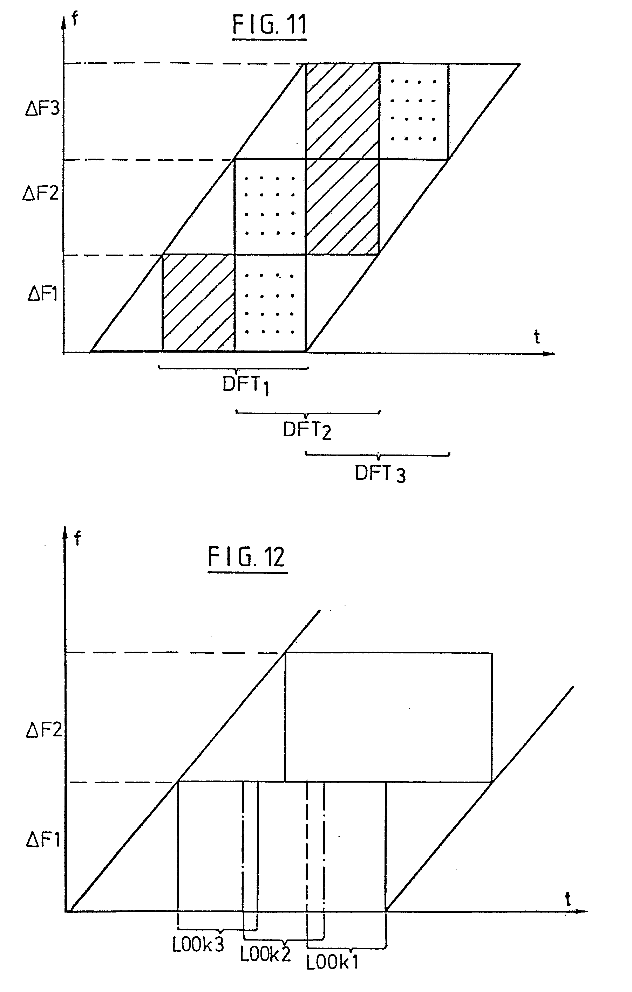

Fig. 10 illustrates a variation to the embodiment described heretofore. This second embodiment essentially differs from the preceding one (Fig. 3) by using bandpass filters 11 prior to performing the spectral analysis thereby to achieve a pre-filtering operation on the cross-correlated signal CS. This pre-filter operation essentially permits to perform the DFT operation with good efficiency in case the DFT block length covers a large part of the available Doppler bandwidth. This must be the case for efficient single look processing. The implementation of the pre-filter operation is of crucial importance in order to keep the number of operations involved to the minimum (e.g. by polyphase filtering). For a single look approach, the operation of the embodiment of Fig. 10 is explained as follows with reference to the time-frequency diagram of Fig. 11. The total information of an illuminated patch on ground is divided by the filters into a number M of different frequency regions labelled $\Delta F_1$, $\Delta F_2$ and $\Delta F_3$ on Fig. 11. If one takes in each of said regions the maximum possible size DFT sampling, e.g. $DFT_1$, $DFT_2$ and $DFT_3$, the total information used will increase as shown by the shaded and dotted rectangles. Comparing with the diagram of Fig. 8 it is seen that the dotted rectangles represent the information used with the first approach and that the shaded rectangles represent the increase of used information in the second approach. This result in an improved resolution as compared to the first described embodiment.

Also the second embodiment can be applied for multi-look processing. In that case, each part of information in each of said frequency regions ΔFi is divided into equal parts with a certain overlap as illustrated in Fig. 12. These parts are labelled $L_1$, $L_2$, $L_3$ in the $\Delta F_1$ region. The advantages of this multi-look processing as compared to the first approach are as follows:

— feasibility of efficient single-look processing;
— multi-look imagery can be obtained by performing post processing integration of single look data in which case no look sum memory is required;
— due to the small number of output signals per DFT block the data registration errors are small and correction for these may be omitted;
— the buffer memory requirements are lower in principle.

The processing approaches described heretofore perform a one-dimensional spectral analysis in that they use as input a signal which has previously been compressed. In the embodiments depicted in Figs. 3 and 10 the input signal is a range compressed signal, that is a signal of which the range width is reduced essentially to one line containing the range information. In those cases the processing performed in the described system is an azimuth processing.

A second embodiment of the invention method is directed to a two-dimensional processing such that the input needs not to be a compressed signal and consequently the LRMC device can be omitted thereby to avoid the complex operation of such a device.

Consider the response of a target area, extended in range and azimuth as depicted in Fig. 13. One may determine an area common to all individual target responses within the target area formed by a number of rectangular data arrays. To be noted that in case the target area is small as compared to its extent or its input response in range and azimuth, the loss in data usage for processing is small.

This second embodiment is schematically illustrated in Fig. 14. In this embodiment which accepts the raw data signal, the cross-correlation with a reference function signal or dechirp operation (block 12) is performed in range and azimuth whereby the points are resolved in frequency differences along the two dimensions azimuth and range. An array of M×L bandpass filters 13 is used after the cross-correlation operation allowing for efficient single-look processing and data array selection. The output from each of the M×L filters is applied to a separate processing channel which applies a

two-dimensional discrete Fourier transform (DFT) operation (block 14). The other elements in each channel are similar to those in the embodiments described hereinbefore. The signals from the MxL channels may be added either coherently or incoherently depending on the spatial resolution and the number of looks desired.

Look registration can be controlled exactly by applying the appropriate phase correction term prior to DFT operation (i.e. in combination with the weighting operation).

The bandpass filter operation in a specific dimension may be omitted in case only multi-look processing is performed in that dimension and, in case of azimuth processing, look registration correction is either not required (e.g. all arrays contain the same range interval) or performed after the DFT operation.

## Claims

1. Method of processing data signals generated by spaceborne synthetic aperture radar (SAR) systems, which comprises cross correlation of the received SAR data signals with a reference function signal, processing by means of a discrete Fourier transform (DFT), selection by means of Doppler processing, and accumulation and compensation for geometric distortions, characterized in that said cross correlation reference function signal has a frequency-time history equal and opposite to the ideal received signal, the result of the cross correlation being a series of constant frequency signals displaced in time, that said discrete Fourier transform (DFT) processing is a DFT spectral analysis of said constant frequency signals, and that said Doppler history processing is a Doppler centroid estimation applied to the DFT-processed signals.

2. Method according to claim 1 which is implemented as a one-dimensional approach by accepting already compressed (either in range or in azimuth) data signals.

3. Method according to claim 1 which is implemented as a two-dimensional approach using as an input, linear FM modulated data signals extending both in azimuth and in range domain.

4. Apparatus for processing data signals generated by spaceborne or airborne synthetic aperture radar (SAR), comprising cross correlating means (1), discrete Fourier transform processing means (5), Doppler history processing means (6) and accumulation means (8) characterized in that said cross correlating means (1) cross correlates the data signal with a reference signal (2) which has a frequency-time history equal and opposite to the frequency-time history of the ideal received data signal, said cross correlating means (1) producing a series of constant frequency signals, displaced relative to one another in time, that said discrete Fourier transform means (5) is arranged to spectrally analyse said constant frequency signals, and that said Doppler history processing means (6) is arranged to select the constant frequency signals on the basis of Doppler centroid estimation.

5. Apparatus according to claim 4 wherein a band-pass filter (11) is incorporated which provides a prefiltering of the cross-correlated signals.

6. Apparatus according to claim 4 or 5 wherein the generated data signals are range-compressed and the said reference signal (2) with which the generated data signals are correlated is a function of the azimuth signal.

7. Apparatus according to any of claims 4 to 6 wherein buffering means (3) is incorporated for buffering the cross-correlated signals before being processed by means of the Fourier transform.

8. Apparatus according to claim 4 or claim 5 wherein the generated data signals are azimuth-compressed and the said reference signal (2) with which the generated data signals are correlated is a function of the range signal.

9. Apparatus according to claim 4 or any claim appendant thereto wherein the selecting means (6) operates on the output of the Fourier transform means (5).

10. Apparatus according to claim 7 wherein said selecting means (6) is provided in the input of the buffering means (3).

11. Apparatus in accordance with claim 4 wherein the cross-correlating means (1) performs a cross-correlation in both range and azimuth whereby the feature being scanned are resolved in frequency differences along the two dimensions, azimuth and range, and the output thereof is connected to a plurality (M) of said channels each of which incorporates one or more band-pass filters ($13_{11} \ldots 13_{1L}$; $13_{M1} \ldots 13_{ML}$ and carries out a two-dimensional discrete Fourier transform on said cross-correlated data.

## Patentansprüche

1. Verfahren zur Verarbeitung von Datensignalen, die durch im Raum (Weltraum) befindliche Seitensicht-radar-(SAR)-Systeme erzeugt werden, welches eine Kreuz-Korrelation der empfangenen SAR-Datensignale mit einem Referenzfunktionssignal, das Verarbeiten durch eine diskrete Fouriertransformation (DFT), die Auswahl durch eine Doppler-Verarbeitung und eine Akkumulierung und Kompensation für die geometrischen Verzerrungen aufweist, dadurch gekennzeichnet, daß das Kreuz-Korrelations-Referenzfunktionssignal einen Frequenz-Zeitverlauf aufweist, welcher gleich und entgegengesetzt zum idealen empfangenen Signal ist, wobei das Ergebnis der Kreuz-Korrelation eine Serie von Konstant-Frequenzsignalen ist, welche zeitlich versetzt sind, daß das diskrete Fouriertransformations-(DFT)-Verarbeiten eine DFT-Spektralanalyse der Konstant-Frequenzsignale beinhaltet und daß die Doppler-Verlaufs-Verarbeitung eine Doppler-Schwerpunktsbewertung beinhaltet, angewendet auf die DFT-verarbeiteten Signale.

2. Verfahren nach Anspruch 1, dadurch gekennzeichnet, daß es als ein-dimensionale Annäherung durchgeführt wird, durch Aufnahme bereits komprimmierter (entweder hinsichtlich der Reichweite oder hinsichtlich des Azimuths) Datensignale.

3. Verfahren nach Anspruch 1, dadurch gekennzeichnet, daß es als eine zwei-dimensionale Annäherung durchgeführt wird unter Verwendung von linear FM-modulierten Datensignalen als Eingangssignal, welche sich sowohl in den Azimuth also auch in den Reichweitenbereich erstrecken.

4. Vorrichtung zur Verarbeitung von Datensignalen, welche durch im Weltraum oder im Luftraum befindliche Seitensichtradar-(SAR)-Systeme erzeugt werden, umfassend eine Kreuz-Korrelationseinrichtung (1), eine diskrete Fouriertransformations - Verarbeitungseinrichtung (5), eine Doppler-Verlaufsverarbeitungseinrichtung (6) und ein Akkumulierungseinrichtung (8), dadurch gekennzeichnet, daß die Kreuz-Korrelationseinrichtung (1) die Datensignale mit einem Referenzsignal (2) kreuzkorreliert, welches einen Frequenz-Zeitverlauf aufweist, der gleich und entgegensetzt dem Frequenz-Zeitverlauf des ideal empfangenen Datensignales ist, wobei die Kreuz-Korrelationseinrichtung (1) eine Reihe von Konstant-Frequenzsignalen erzeugt, die relativ zueinander in der Zeit versetzt sind, daß die diskrete Fourier-transformationseinrichtung (5) zur spektralen Analyse der Konstant-Frequenzsignale vorgesehen ist und daß die Doppler-Verlaufsverarbeitungseinrichtung (6) zur Auswahl der Konstant-Frequenzsignale auf der Basis der Doppler-Schwerpunktsbewertung vorgesehen ist.

5. Vorrichtung nach Anspruch 4, dadurch gekennzeichnet, daß ein Bandpaßfilter (11) mit einbezogen ist, welches eine Vorfilterung der kreuz-korrelierten Signale bewirkt.

6. Vorrichtung nach Anspruch 4 oder 5, dadurch gekennzeichnet, daß die erzeugten Datensignale Reichweiten- oder Bereichs-komprimmiert sind und daß das Referenzsignal (2), mit dem die erzeugten Datensignale korreliert sind, eine Funktion des Azimuthsignales ist.

7. Vorrichtung nach einem der Ansprüche 4 bis 6, dadurch gekennzeichnet, daß eine Puffereinrichtung (3) mit einbezogen ist, um die kreuzkorrelierten Signale vor ihrer Verarbeitung durch die Fouriertransformation zu puffern.

8. Vorrichtung nach Anspruch 4 oder 5, dadurch gekennzeichnet, daß die erzeugten Datensignale Azimuth-komprimiert sind und daß das Referenzsignal (2), mit dem die erzeugten Datensignale korreliert werden, eine Funktion des Bereichs oder Reichweitensignales ist.

9. Vorrichtung nach Anspruch 4, oder einem von ihm abhängigen Ansprüchen, dadurch gekennzeichnet, daß die Auswahleinrichtung (6) auf den Ausgang der Fouriertransformationseinrichtung (5) wirkt.

10. Vorrichtung nach Anspruch 7, dadurch gekennzeichnet, daß die Auswahleinrichtung (6) mit dem Eingang der Puffereinrichtung (3) in Beziehung bzw. in Verbindung steht.

11. Vorrichtung nach Anspruch 4, dadurch gekennzeichnet, daß die Kreuz-Korrelationseinrichtung (1) eine Kreuz-Korrelation sowohl für die Reichweite als auch für den Azimuth ausführt, wodurch das abgetastete Merkmal längs der beiden Dimensionen, Azimuth und Reichweite in Frequenzdifferenzen aufgelöst bzw. zerlegt werden und daß sein Ausgang mit einer Vielzahl (M) Kanälen verbunden ist, von denen jeder ein oder mehrere Bandpaßfilter ($13_{11}, \ldots 13_{1L}; 13_{M1} \ldots 13_{ML}$) aufweist und eine zwei-dimensionale diskrete Fourier-transformation für die kreuz-korrelierten Daten ausführt.

## Revendications

1. Procédé pour le traitement de données délivrées par un système radar à vision latérale, comprenant l'intercorrélation des données reçues avec un signal de fonction de référence, traitement au moyen d'une transformée de Fourier discrète (TFD), sélection au moyen d'un traitement de l'effet Doppler et accumulation et compensation des distorsions géométriques, caractérisé en ce que le signal de fonction de référence pour l'inter-corrélation a une évolution fréquence-temps égale et opposée à celle du signal reçu idéal, le résultat de l'inter-corrélation étant une série de signaux de fréquence constante décalés dans le temps, en ce que le traitement par transformée de Fourier discrète consiste en une analyse spectrale par transformée de Fourier discrète des signaux de fréquence constante et en ce que le traitement par évolution de l'effet Doppler est une estimation centroîde de l'effet Doppler appliquée aux signaux traités par transformée de Fourier discrète.

2. Procédé selon la revendication 1, caractérisé en ce qu'il est mis en oeuvre sous forme uni-dimensionnelle par réception de données déjà comprimées (soit en azimut, soit en distance).

3. Procédé selon la revendication 1, caractérisé en ce qu'il est mis en oeuvre sous forme bi-dimensionnelle par utilisation comme signaux d'entrée, des données modulées par modulation de fréquence linéaire et s'étendant à la fois en azimut et en distance.

4. Dispositif pour le traitement de données délivrées par un système radar à vision latérale comprenant un moyen d'inter-corrélation (1), un moyen de traitement par transformée de Fourier discrète (5), un moyen de traitement par évolution de l'effet Doppler (6) et un moyen d'accumulation (8), caractérisé en ce que le moyen d'inter-corrélation (1) est agencé pour

inter-corréler les données avec un signal de référence (2) qui a une évolution fréquence-temps égale et opposée à celle des données reçues idéales, ledit moyen d'inter-corrélation (1) produisant une série de signaux de fréquence constante, décalés l'un par rapport à l'autre dans le temps, en ce que le moyen de traitement par transformée de Fourier discrete (5) est agencé pour effectuer une analyse spectrale des signaux de fréquence constante, et en ce que le moyen de traitement par évolution de l'effet Doppler (6) est agencé pour sélectionner les signaux de fréquence constante sur la base d'une estimation centroîde de l'effet Doppler.

5. Dispositif selon la revendication 4, caractérisé en ce qu'il comprend un filtre passe-bande (11) qui assure une préfiltration des signaux inter-corrélés.

6. Dispositif selon la revendication 4 ou 5, caractérisé en ce que les données engendrées sont comprimées en distance et ledit signal de référence (2) avec lequel les données engendrées sont corrélées est une fonction du signal d'azimut.

7. Dispositif selon l'une quelconque des revendications 4 à 6, caractérisé en ce qu'il comprend un moyen tampon (3) pour stocker temporairement des signaux intercorrélés avant d'être traités au moyen de la transformée de Fourier.

8. Dispositif selon la revendication 4 ou 5, caractérisé en ce que les données engendrées sont comprimées en azimut et le signal de référence (2) avec lequel les données engendrées sont corrélées est une fonction du signal de distance.

9. Dispositif selon l'une quelconque des revendications 4 à 8, caractérisé en ce que le moyen de sélection (6) travaille sur la sortie du moyen de traitement par transformée de Fourier (5).

10. Dispositif selon la revendications 7, caractérisé en ce que le moyen de sélection (6) est réalisé à l'entrée du moyen tampon (3).

11. Dispositif selon la revendication 4, caractérisé en ce que le moyen d'inter-corrélation (1) effectue une inter-corrélation en distance et en azimut de telle manière que la caractéristique explorée soit résolue en différences de fréquence suivant deux dimensions, azimut et distance, et la sortie dudit moyen d'inter-corrélation est connectée à plusieurs canaux (M), chacun d'eux incorporant un ou plusieurs filtres passe-bande ($13_{11} \ldots 13_{1L}$, $13_{M1} \ldots 13_{ML}$) est effectuant une transformée de Fourier discrète bi-dimensionnelle sur les données inter-corrélées.

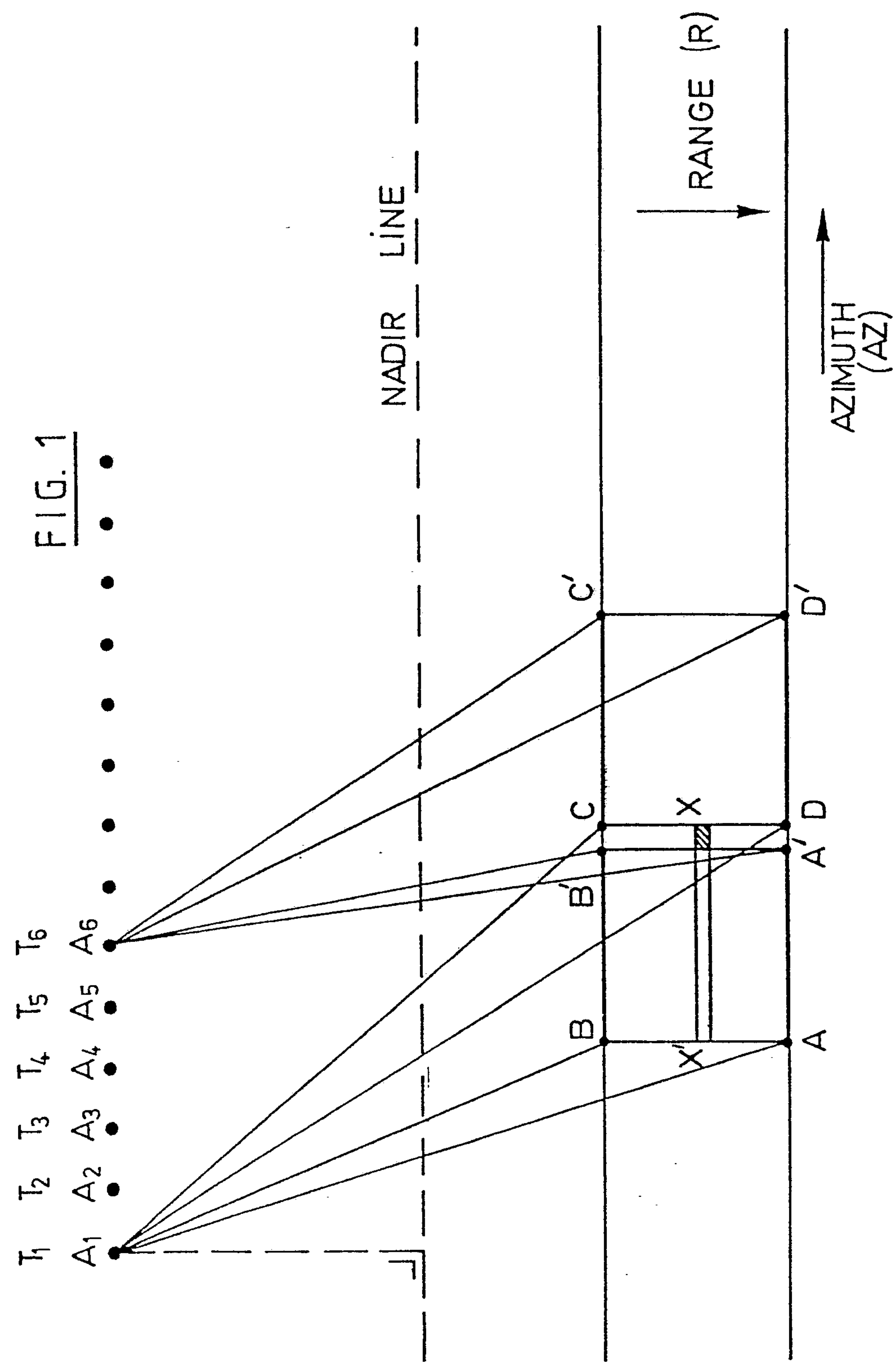

T1 T2 T3 T4 T5 T6
A1 A2 A3 A4 A5 A6
NADIR LINE
RANGE (R)
AZIMUTH (AZ)
A B C D
A' B' C' D'
X X'


FIG. 1

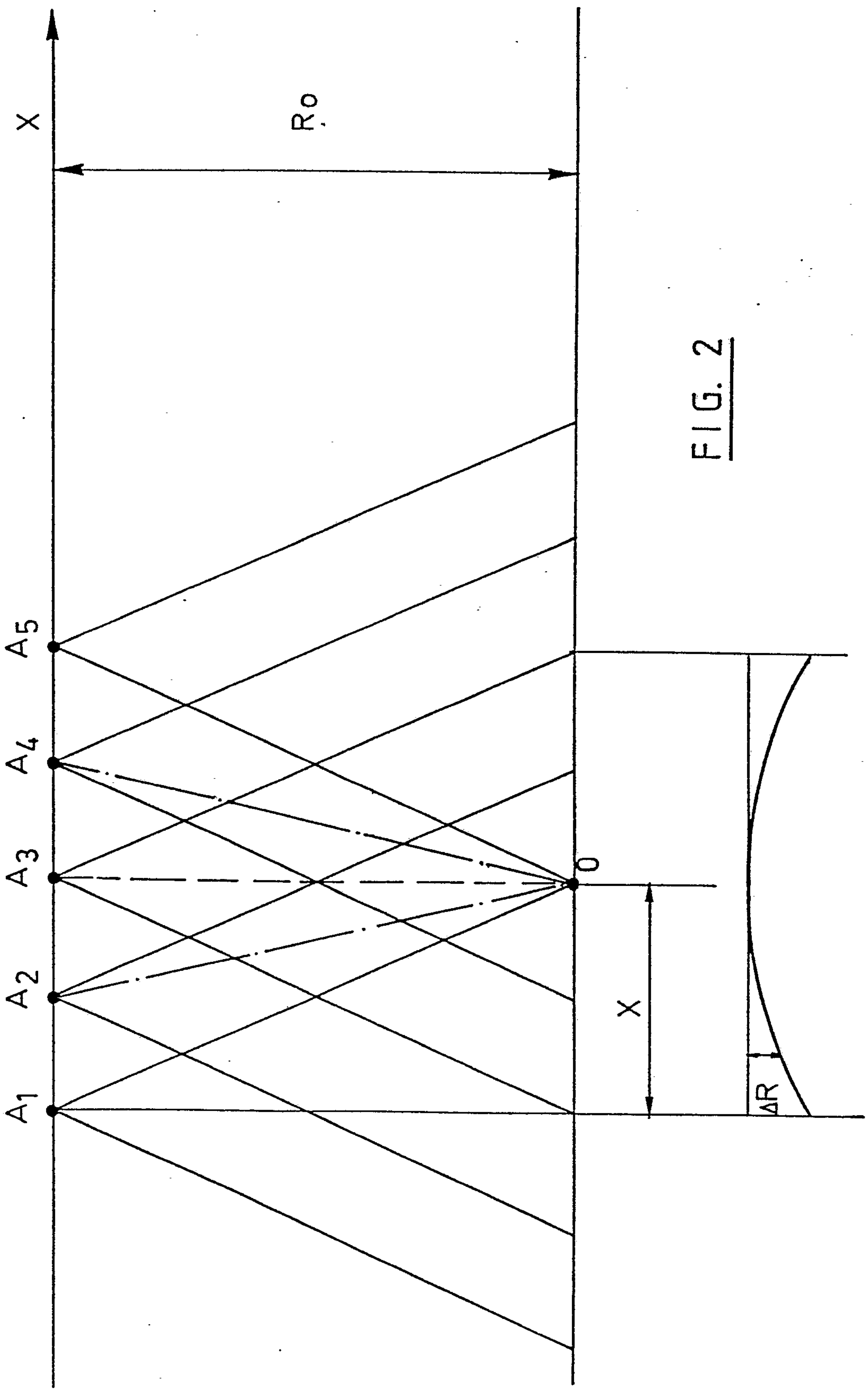


FIG. 2

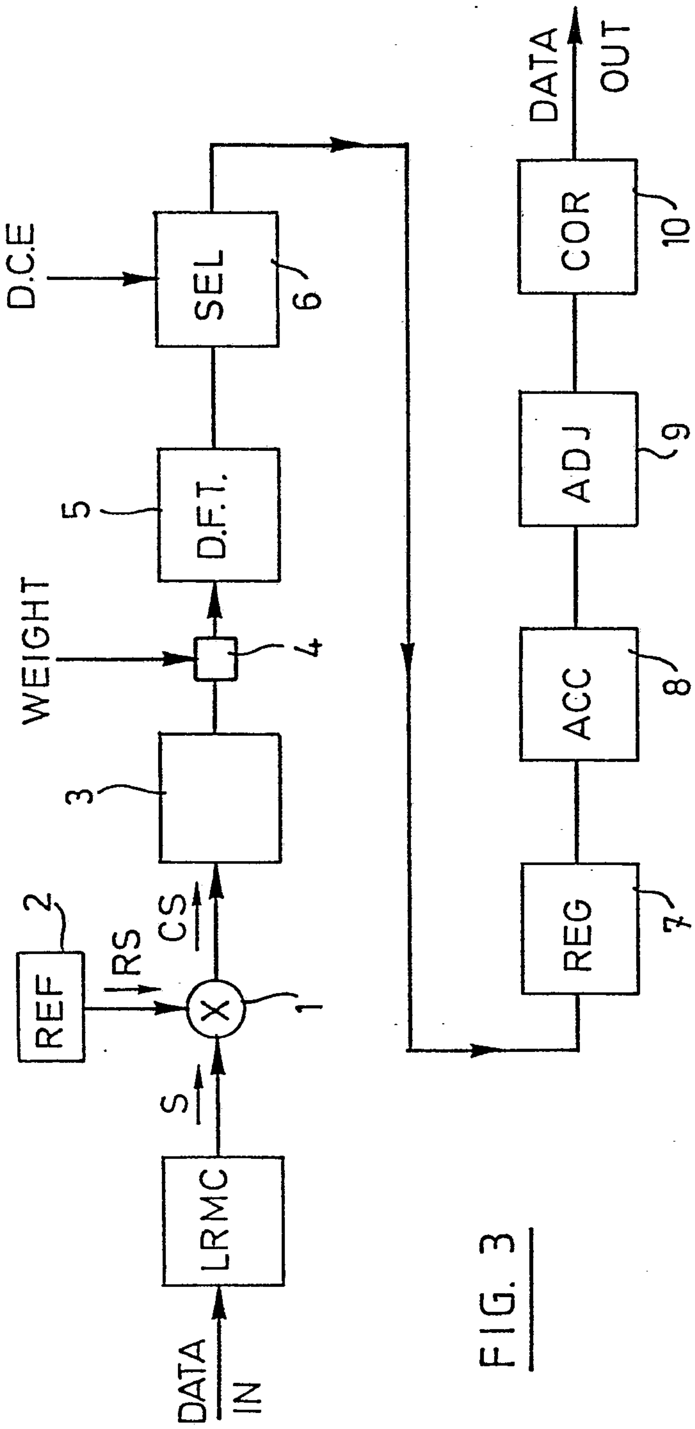
DATA IN
LRMC
S
REF
2
RS
1
CS
3
WEIGHT
4
5
D.F.T.
D.C.E
SEL
6
REG
7
ACC
8
ADJ
9
COR
10
DATA OUT

FIG. 3

FIG. 4

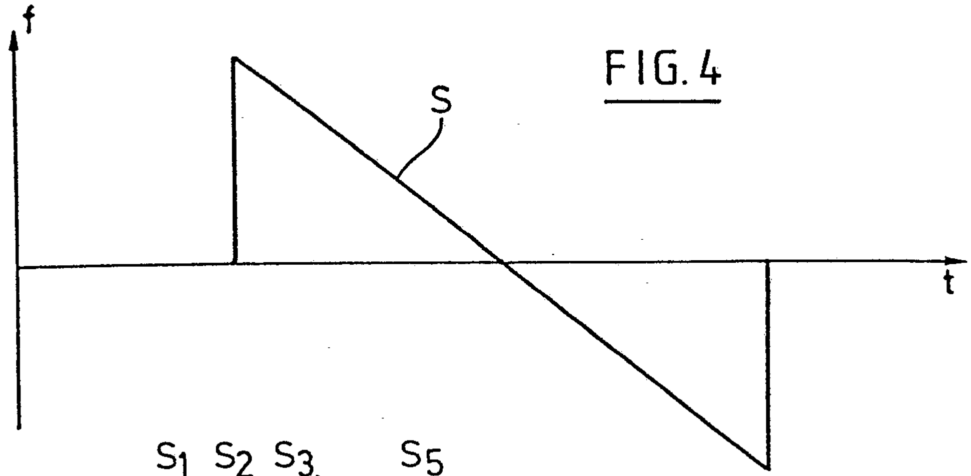


FIG. 5

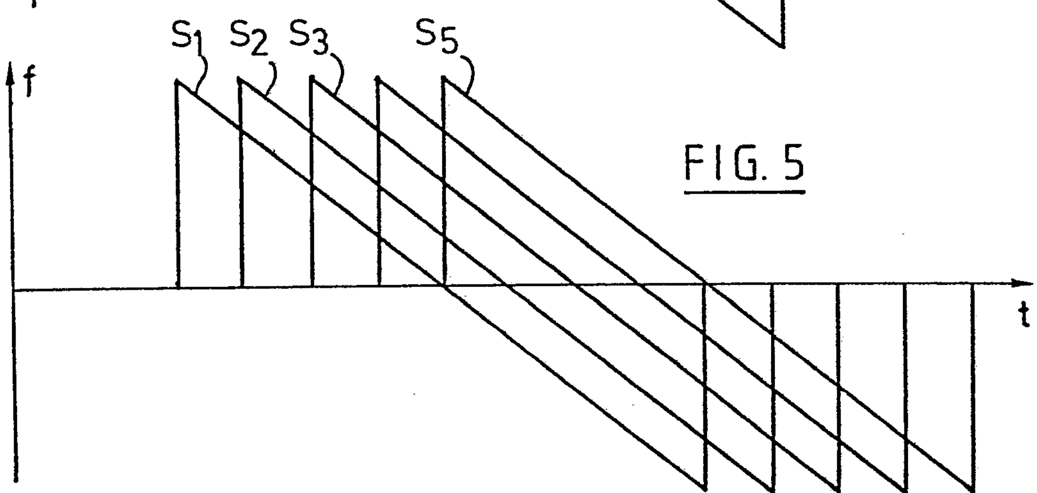


FIG. 13

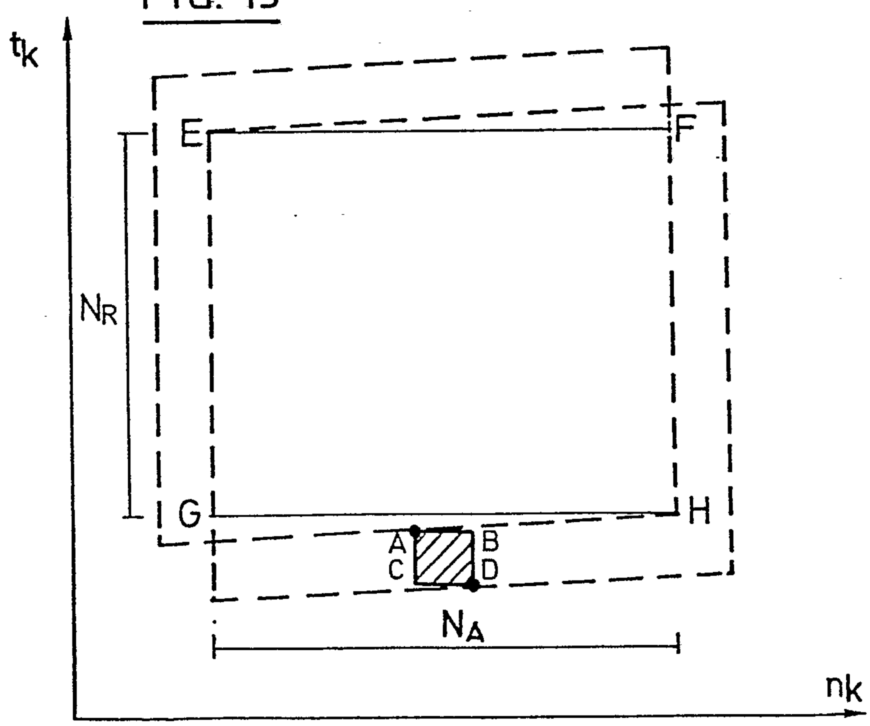

FIG. 6a

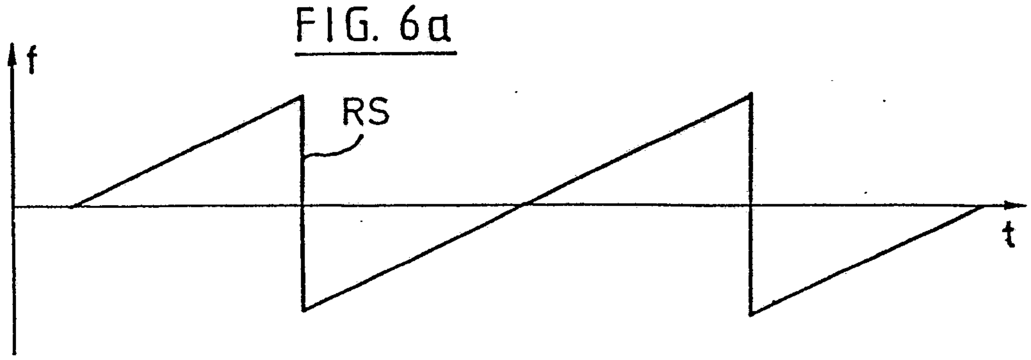


FIG. 6b

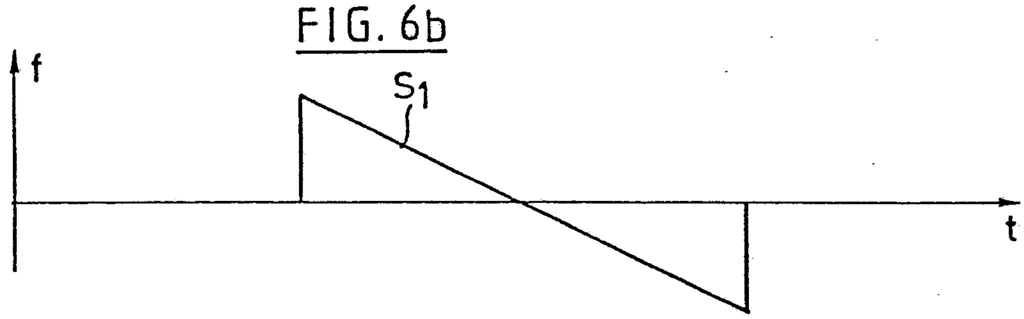


FIG. 6c

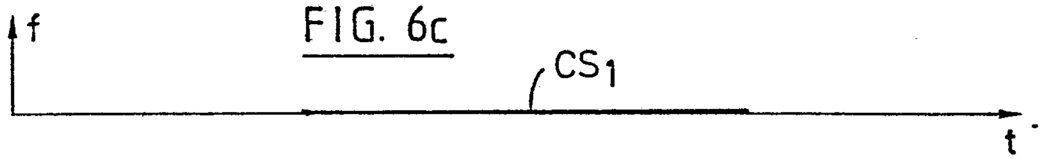


FIG 6d

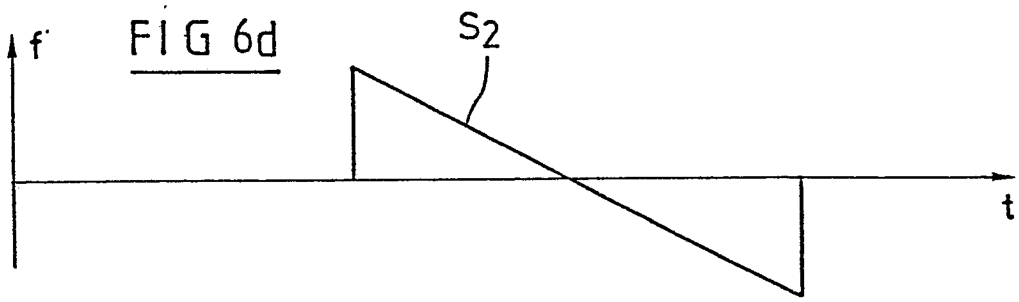


FIG. 6e

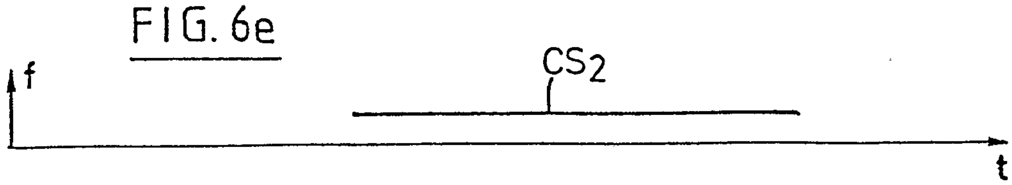

FIG. 7

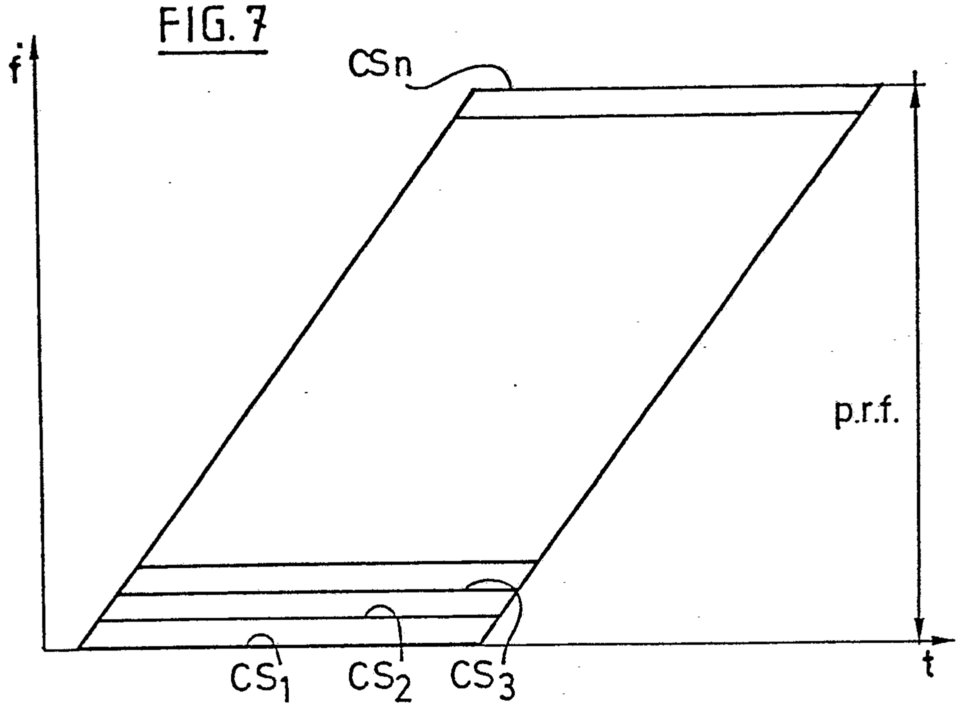


FIG. 8

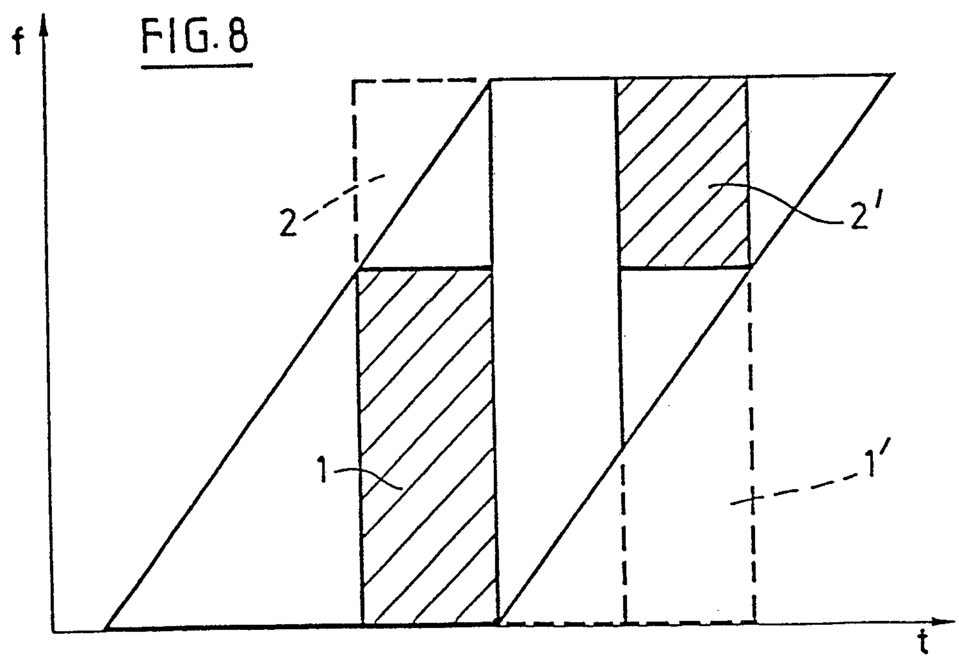

FIG. 9

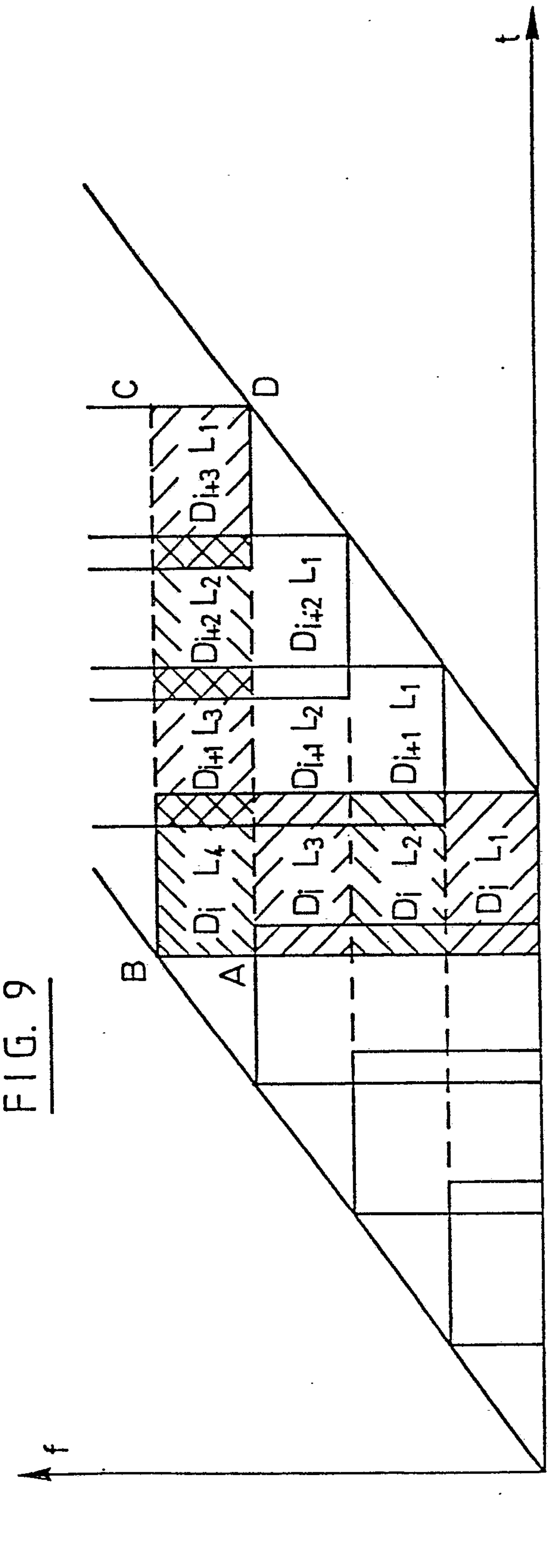
t
f
A
B
C
D
Di L4
Di L3
Di L2
Di L1
Di+1 L3
Di+1 L2
Di+1 L1
Di+2 L2
Di+2 L1
Di+3 L1

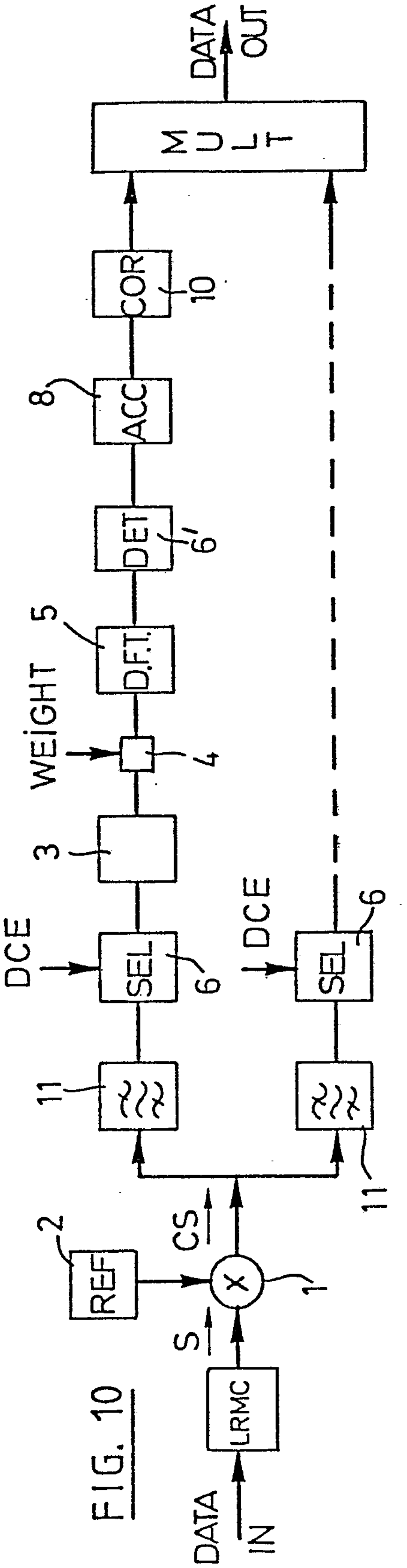
DATA IN
LRMC
S
REF
2
1
CS
11
11
DCE
SEL
6
DCE
SEL
6
3
WEIGHT
4
5
D.F.T.
DET
6'
8
ACC
COR
10
MULT
DATA OUT

FIG. 10

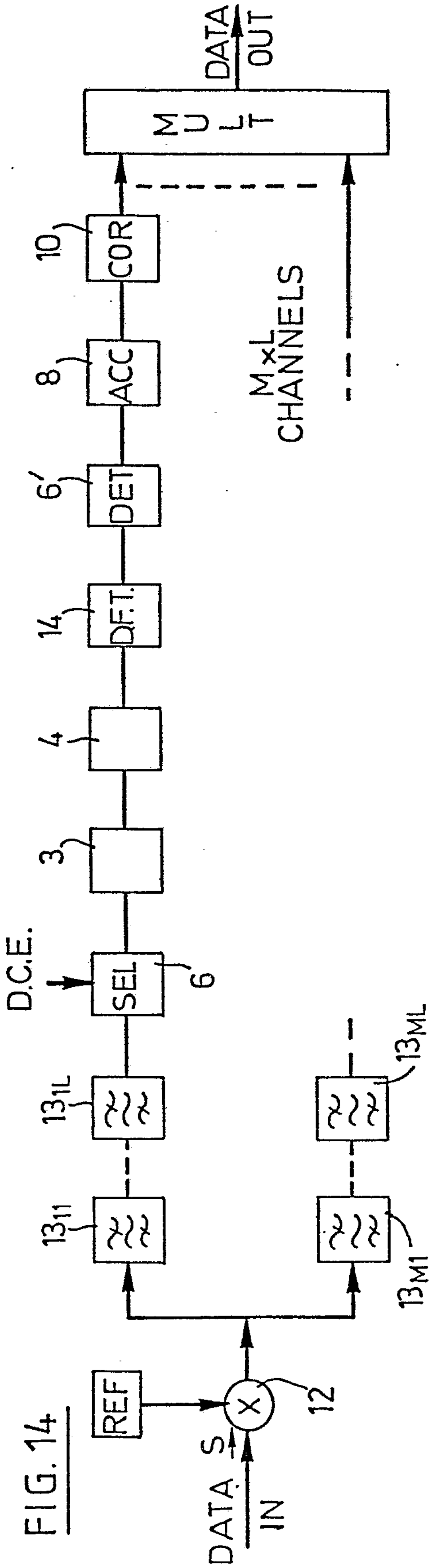
DATA IN
S
REF
12
$13_{11}$
$13_{1L}$
$13_{M1}$
$13_{ML}$
D.C.E.
SEL
6
3
4
14
D.F.T.
6'
DET
8
ACC
10
COR
M×L CHANNELS
MULT
DATA OUT

FIG. 14

FIG. 11

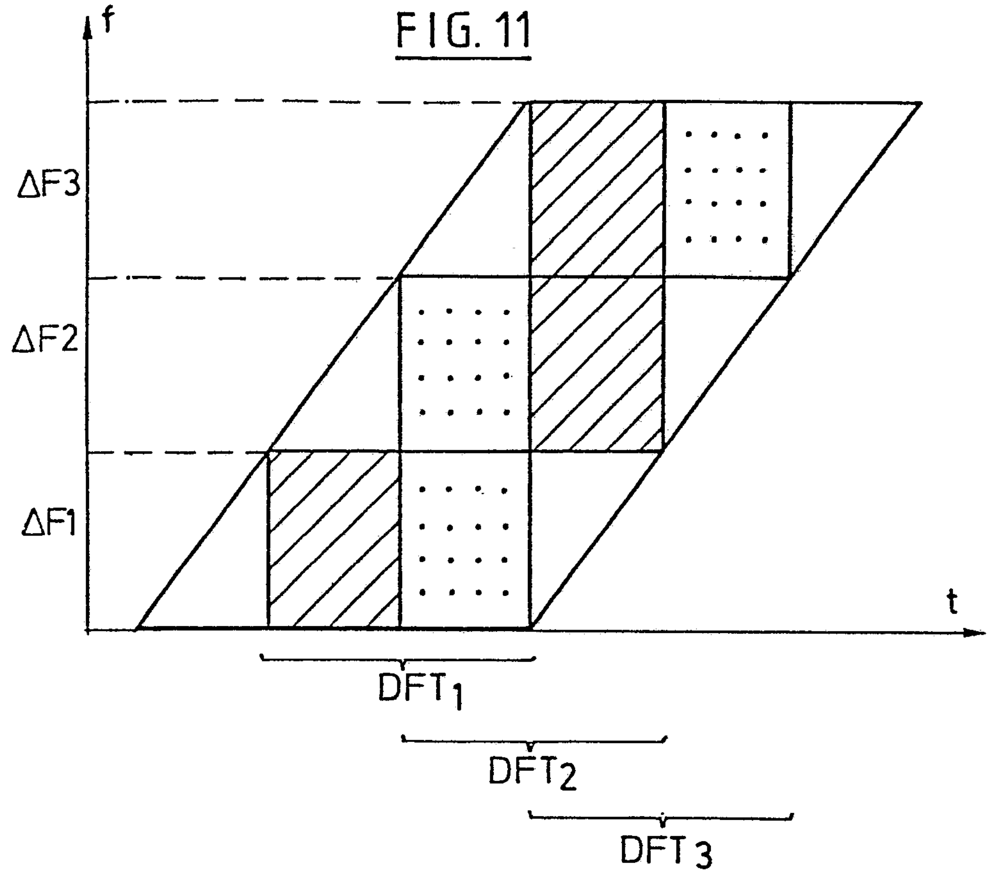


FIG. 12